# EUROPEAN PATENT APPLICATION

(11) **EP 4 144 974 A1**
(43) Date of publication of application: **08.03.2023**
(21) Application number: 22191019.3
(22) Date of filing: 18.08.2022
(51) Int. Cl.: F02D 13/02, F02D 19/10, F02D 35/02, F02D 41/00, F02B 37/18

(54) **A METHOD FOR OPERATING A LARGE ENGINE AND A LARGE ENGINE**

(30) Priority: 02.09.2021 EP 21194540
(71) Applicant: Winterthur Gas & Diesel AG, 8401 Winterthur (CH)
(72) Inventor: Hansen, Lars, 8267 Berlingen (CH); Naert, Stein, 8604 Volketswil (CH)
(74) Representative: IPS Irsch AG

(57) **Abstract**

A method for operating a large engine is proposed, which can be operated at least in a gas mode, in which an amount of gas is introduced as fuel into the cylinder, the gas is mixed with scavenging air and ignited at an air-gas-ratio by means of a pilot injection to start the combustion. During operation in the gas mode at least one control parameter, which is characteristic of the combustion quality in the cylinder, is determined, wherein an upper threshold value and/or a lower threshold value are predetermined for the control parameter, and wherein at least one operating parameter is adjusted such that the control parameter is at least as large as the lower threshold value and/or at most as large as the upper threshold value. The at least one operating parameter comprises a pilot injection timing, which determines the start of the combustion, or a combustion speed adjusting for modifying the combustion speed. Furthermore, a large engine is proposed.

## Description

The invention relates to a method for operating a large engine which can be operated at least in a gas mode and to a large engine according to the preamble of the independent patent claim of the respective category.

Large engines may be configured as large diesel engines, which are usually operated with self-ignition of the fuel, or as large Otto engines, which are usually operated with induced ignition, e.g. spark ignition. Furthermore, large engines are known, which are operated in a mixed mode, i.e. with both self-ignition of a fuel and induced ignition of a fuel.

Large engines, which can be designed as two-stroke or four-stroke engines, for example as longitudinally scavenged two-stroke large diesel engines, are often used as drive units for ships or in stationary operation, e.g. to drive large generators for generating electrical energy. The engines usually run for considerable periods in continuous operation, which places high demands on operational safety and availability. As a consequence, particularly long maintenance intervals, low wear and an economical handling of the operating materials are central criteria for the operator. Large engines typically have cylinders, which inner diameter (bore) is at least 200 mm. Nowadays, large engines with a bore of up to 960 mm or even more are used. Within the framework of this application the term "large engine" designates an internal combustion engine with a bore of the cylinder(s), which is at least 200 mm and preferably at least 300 mm.

Large diesel engines are classically operated with heavy fuel oil. Under the aspects of economic and efficient operation, compliance with exhaust-gas limit values and the availability of resources, alternatives to the fuel heavy fuel oil are now also being sought for large diesel engines. In this respect, both liquid fuels are used, i.e. fuels that are introduced into the combustion chamber in the liquid state, and gaseous fuels, i.e. fuels that are introduced into the combustion chamber in the gaseous state.

Examples of liquid fuels as known alternatives to heavy fuel oil are other heavy hydrocarbons, which are particularly left over as residues from oil refining, alcohols, in particular methanol or ethanol, gasoline, diesel, or also emulsions or suspensions. For example, it is known to use emulsions known as MSAR (Multiphase Superfine Atomized Residue) as fuel. A well-known suspension is that of coal dust and water, which is also used as fuel for large engines. As gaseous fuels, natural gases such as LNG (liquefied natural gas), liquefied gases such as LPG (liquefied petroleum gas) or ethane are known.

In particular, large diesel engines are also known which can be operated with at least two different fuels, whereby the engine is operated either with one fuel or with the other fuel depending on the operating situation or environment.

One example of a large diesel engine that can be operated with two different fuels is a large diesel engine, which is configured as a dual-fuel large diesel engine. This engine can be operated in a liquid mode in which a liquid fuel is introduced into the cylinder for combustion and in a gas mode in which a gas is introduced into the cylinder as fuel.

Large diesel engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition of an ignitable pre-mixed air-fuel mixture. This induced ignition can take place, for example, by an electrical spark, e.g. with a spark plug, or also by the self-ignition of a small injected amount of fuel, which then causes the induced ignition of another fuel. The small amount of fuel intended for self-ignition is often injected into a pre-chamber connected to the combustion chamber.

Furthermore, mixed forms using both Otto and diesel operation are also known.

Within the framework of this application, the term "large diesel engine" refers to such engines, which can be operated at least in a diesel operation. In particular, the term "large diesel engine" thus also comprises such dual-fuel large engines that can be operated in another mode, e.g. Otto operation, in addition to diesel operation.

Thus, the term "large engine" comprises large diesel engines (as explained hereinbefore), large Otto engines, i.e. large engines, which can be operated only with Otto operation, e. g. a large gas engine operated with a gaseous fuel, and large engines, which can be operated in a mixed mode. The mixed mode is a mode where the engine is operated concurrently with diesel and Otto operation.

Within the framework of this application, the term "gas mode" or "operation in gas mode" refers to using only the gas or gaseous fuel for torque-generating combustion as fuel. As already mentioned, it is possible and quite common that in the gas mode for the induced ignition of the pre-mixed air-fuel mixture a small amount of a self-igniting liquid fuel, e.g. heavy fuel oil, is injected to carry out the induced ignition, but nevertheless the combustion process which generates the torque is operated completely with the gas or the gaseous fuel.

This process of induced ignition by self-ignition of a small amount of a liquid fuel is sometimes referred to as pilot injection. This pilot injection has nothing to do with the injection of the liquid fuel into the combustion chamber when the large engine is operated in liquid mode. A different injection device is usually, but not necessarily, used for the pilot injection than for the injection of the liquid fuel in the liquid mode. In addition, in pilot injection, the small amount of the liquid fuel is also frequently not injected directly into the combustion chamber, but into at least one pre-chamber that is connected to the combustion chamber via a channel.

In particular in the gas mode, with regard to an economical, efficient, reliable and low-pollution operation, it is very important to avoid abnormal combustion processes, which occur in particular when the ratio of scavenging air to gas, i.e. the air-fuel ratio, is not within a certain range.

If the gas content is too high, the air-fuel mixture becomes too rich. The combustion of the mixture takes place too fast or too early, for example by self-ignition, which can lead to the knocking of the engine. If the air content is too high, the air-fuel mixture is too lean and misfiring can occur, which of course also has a negative effect on the efficient and low-pollution operation of the engine. In particular, these two states of too high gas content and too high air content are designated as abnormal combustion processes. Thus, in the gas mode one strives for a combustion process without self-ignition of the air-gas mixture. The combustion process shall take place between the limits where the air-gas mixture is neither too rich nor too lean

If, for a given load of the large engine, the generated torque is plotted against the air-fuel ratio, the limits between a high-quality combustion and an abnormal combustion are given, for example, by two limit curves, namely a knocking limit and a misfiring limit, wherein the high-quality combustion lies between these two limit curves. In operating states that are beyond the knocking limit, the air-gas mixture is too rich, i.e. there is too little air in the mixture. A mixture that is too rich can lead to various problems, namely that the combustion takes place too fast (fast combustion), or that the engine begins to knock or that the mixture in the cylinder then usually begins to combust (pre-ignition) too early (related to the working cycle) by self-ignition due to the excessive gas content. In operating states beyond the misfiring limit, the air-gas mixture is too lean, i.e. there is not enough gas and/or too much air in the combustion chamber for an optimum combustion.

Thus, there is a need, in particular when operating a large engine, for example a large diesel engine configured as a dual-fuel engine, in the gas mode, to keep the air-fuel ratio, which is also referred to as lambda (λ), in such a range that the air-gas ratio is neither too low (mixture too rich) nor too high (mixture to lean). Thus, the combustion process should be optimized with respect to efficiency, emissions and reliability of the engine.

Starting from this state of the art, it is therefore an object of the invention to propose a method for operating a large engine, which can be operated at least in a gas mode, with a high-quality combustion in the gas mode, so that the air-fuel ratio is between the knocking limit, or the limit where self-ignition occurs, respectively, and the misfiring limit. Furthermore, it is an object of the invention to propose a large engine which is operated with such a method.

The subject matter of the invention satisfying these objects is characterized by the features of the independent patent claim of the respective category.

Thus, according to the invention, a method for operating a large engine is proposed, which can be operated at least in a gas mode, in which an amount of gas is introduced as fuel into the cylinder, the gas is mixed with scavenging air and ignited at an air-gas-ratio by means of a pilot injection to start the combustion. During operation in the gas mode at least one control parameter which is characteristic of the combustion quality in the cylinder is determined, wherein an upper threshold value and/or a lower threshold value are predetermined for the control parameter, and wherein at least one operating parameter is adjusted such that the control parameter is at least as large as the lower threshold value and at most as large as the upper threshold value. The at least one operating parameter comprises a pilot injection timing, which determines the start of the combustion, or a combustion speed adjusting for modifying the combustion speed.

According to the invention it is proposed to use a control parameter which is indicative for the combustion quality in the cylinder to ensure that the engine is operated in the gas mode always with a high-quality combustion, i.e. with an air-fuel ratio which is at least between the knocking limit and the misfiring limit and preferred at an optimum for the combustion process. In particular, during operation in the gas mode self-ignition of the air-gas mixture is avoided or at least minimized.

For example, by measuring the firing and compression pressure curve in the cylinder the combustion can be analyzed and compared with the optimum with respect to efficiency, emissions and reliability of the engine. The optimum for the combustion process can be dependent on the load at which the engine is operated and a vector or matrix is needed for the optimized setpoint. To analyze the combustion process at least one control parameter is measured during operation of the engine. Suited control parameters are for example: the heat release rate of the combustion process, the begin of the combustion, i.e. the time of the ignition, the compression pressure, the firing pressure, i.e. the maximum value of the pressure occurring in the cylinder during the working cycle of the piston, the location of the firing pressure, or the location of the beginning of the pilot injection. The location can be measured e.g. by means of the crank angle, at which the event takes place. All these control parameters are suitable to assess or to determine the quality of the combustion process in the cylinder.

The at least one operating parameter is then used to adjust the quality of the combustion process to an optimum.

The operating parameters are preferably used to control the combustion speed in the cylinder or to control the phasing of the combustion or both the combustion speed and the combustion phasing. The phasing of the combustion comprises the start of the combustion process, i.e. the ignition of the air-gas mixture in the cylinder as well as the timing of the exhaust valve, in particular the closing of the exhaust valve, which adjusts the compression pressure. Thus, the pilot injection timing can be used to control the combustion phasing. The combustion speed can be controlled for example by means of an exhaust gas recirculation rate, which influences the reactivity of the air-gas mixture in the cylinder.

Thus, during operation of the large engine in the gas mode, the at least one control parameter is measured to assess the quality of the combustion. If the combustion is not at its optimum, at least one operating parameter is adjusted to improve the quality of the combustion process.

According to a preferred embodiment at least two operating parameters, namely a first operating parameter and a second operating parameter, are adjusted such that the control parameter is at least as large as the lower threshold value and/or at most as large as the upper threshold value. Since many operating parameters can be modified only within given limits, it is preferred to have at least two operating parameters to adjust the quality of the combustion process.

As an example, the first operating parameter is the pilot injection timing, and the second operating parameter is an exhaust gas recirculation rate or an exhaust valve timing for closing an exhaust valve of the cylinder. If, for example, the location of the firing pressure (the maximum value of the pressure in the cylinder) measured by means of a crank angle is used as the control parameter, a lower and an upper threshold value for the location of the firing pressure can be predetermined. E.g. the lower threshold value is the crank angle 5° after top dead center and the upper threshold value is the crank angle 8° after top dead center. As usual in the art, the crank angle 0° corresponds to the top dead center position of the piston. Thus, the operating parameters shall be adjusted such, that the location of the firing pressure is at least at a crank angle of 5° after top dead center and at most at a crank angle of 8° after top dead center. Initially, the first operating parameter, i.e. the pilot injection timing, is adjusted to move the location of the firing pressure in the range from 5° to 8°after top dead center.

The pilot injection timing can be adjusted only within given limits to ensure a reliable and efficient operation of the engine. As an example, the crank angle, at which the ignition shall begin, should be between 17° and 5° before top dead center. This range is also referred to as -17° to -5°, wherein the minus sign indicates a crank angle before top dead center. If the location of the firing pressure cannot be adjusted to the range 5° to 8° by adjusting the pilot injection timing within the range of -17° to -5 degree, the second operating parameter is adjusted in order to shift the location of the firing pressure to the range of 5° to 8°. The second operating parameter is for example the exhaust gas recirculation rate. The exhaust gas recirculation rate influences the combustion speed and the firing pressure, i.e. the value of the firing pressure.

In embodiments where the first and the second operating parameter are adjusted, it is preferred that initially the first operating parameter is adjusted without changing the second operating parameter. Only, if the control parameter cannot be shifted in the desired range by adjusting the first operating parameter, the second operating parameter is adjusted to move the control parameter into the desired range.

Furthermore, it is preferred that a target value for the control parameter is predetermined, wherein the target value is at least as large as the lower threshold value and/or at most as large as the upper threshold value, and wherein the at least one operating parameter or the first and the second operating parameter is/are adjusted to minimize a deviation of the control parameter from the target value. Preferably the target value indicates the value of the respective control parameter, at which the combustion process is at its optimum.

Preferably, the at least one control parameter comprises a location of a firing pressure, or a location of the beginning of the pilot injection, wherein each location is measured by means of a crank angle. The location of the firing pressure is the crank angle, at which the maximum pressure in the cylinder occurs during the working cycle of the piston.

Furthermore, it is preferred, that the at least one control parameter comprises the firing pressure in the cylinder. The firing pressure is the value of the maximum pressure.

In addition, it is preferred that the at least one control parameter comprises a control parameter which is characteristic of the combustion speed in the cylinder. For example, the control parameter comprises a heat release rate of the combustion. The heat release rate of the combustion process can be analyzed as a control parameter out of the combustion process. The heat release rate is inter alia influenced by the combustion speed.

Thus, it is possible to consider the combustion speed in the cylinder to ensure that the air-gas mixture is neither too rich nor too lean. Considering the combustion speed in the cylinder has the additional advantage that a load limitation for the large engine becomes possible also in the gas mode. Regarding for example a large diesel engine, which is configured such that it can be operated in a liquid mode and in a gas mode, the load limitation, i.e. the avoidance of running the engine at overload, is usually realized in the liquid mode by limiting the amount of liquid fuel such as heavy fuel oil. The amount of liquid fuel which is injected into the cylinder during one working cycle is limited to such an amount that the generated torque does not pass a predetermined value. The amount of fuel injected into the cylinder is usually controlled by the injection timing, in particular by the duration of the injection of fuel. Limiting the amount of liquid fuel has proven itself as a reliable measure to avoid an operation at overload in the liquid mode. However, using a limitation of the amount of gas to avoid overload in the gas mode is less reliable, because the amount of gas alone is not necessarily representative for the torque generated by the cylinder or the engine, respectively. There are other factors beside the amount of gas which also have quite a strong influence on the generated torque, for example the composition of the gaseous fuel, the temperature or the humidity of the scavenging air or the pressure of the scavenging air.

By considering the combustion speed in the cylinder it becomes also possible to avoid an operation at overload in the gas mode, i.e. the method according to the invention may also be used as a load limiter to avoid overload of the engine also in the gas mode.

According to a preferred embodiment when analyzing the combustion speed, the control parameter comprises a first pressure at a first crank angle and a second pressure at a second crank angle. Thus, different pressure values are preferably used to determine the combustion speed.

Particularly preferred the control parameter comprises the difference between the first pressure and the second pressure divided by the difference between the first crank angle and the second crank angle. Thus, the pressure change with the change of the crank angle is preferably used for the determination of the control parameter, which is characteristic of the combustion speed.

Furthermore, it is preferred that the first pressure is the firing pressure in the cylinder and/or the second pressure is the ignition pressure in the cylinder. The firing pressure is the maximum pressure occurring in the cylinder during the working cycle of the piston. The ignition pressure is the pressure at the beginning of the combustion process in the cylinder.

Preferably, the ignition pressure is determined by comparing an actual cylinder pressure to a compression pressure curve. The compression pressure curve is the pressure pattern in dependence of the crank angle when no combustion process takes place in the cylinder. The compression pressure curve represents the pressure in the cylinder which is caused by the periodic movement of the piston when there is no combustion in the cylinder.

Thus, the actual cylinder pressure is compared to the compression pressure at the particular crank angle and when the difference between the actual cylinder pressure and the compression pressure passes a predeterminable limit the actual cylinder pressure at said limit is considered as the ignition pressure.

As a further preferred measure, the control parameter is determined individually for each cylinder, wherein the operating parameter is adjusted individually for each cylinder such that the control parameter is at least as large as the lower threshold value and at most as large as the upper threshold value. By this measure it is possible to control the combustion process individually for each cylinder.

Preferably, at least one of the lower threshold value and the upper threshold value is depending on the load with which the large engine is operated. In particular, it is possible that both the lower threshold value and the upper threshold value are depending on the load with which the large engine is operated. For example, if the large engine is operated at full load, i.e. 100% load, an upper and/or a lower threshold value can be used for the control parameter which is different from the upper and/or lower threshold value, which is used for a partial load operation of the large engine.

In embodiments, where a target value is predetermined for a control parameter, it is preferred that the target value is depending on the load with which the large engine is operated.

Regarding the operating parameter(s) used for adjusting the control parameter to the desired or target range it is preferred that the at least one operating parameter comprises the amount of gas introduced into the cylinder. The amount of gas is for example adjusted by the injection timing, i.e. the duration of the injection of gas into the cylinder.

Furthermore, it is preferred that the at least one operating parameter comprises a scavenge air pressure, with which the scavenging air is supplied to the cylinder.

Preferably, the scavenging air is provided by a turbocharger, which is driven by exhaust gases from the combustion, wherein the power of the turbocharger can be changed by means of a waste gate, with which the mass flow of the exhaust gas driving the turbocharger is adjusted, and wherein the waste gate is adjusted to modify the control parameter.

As a further preferred measure, the at least one operating parameter comprises an exhaust valve timing for closing an exhaust valve of the cylinder.

In particular, when the large engine is provided with an exhaust gas recycling system, it is preferred that the at least one operating parameter comprises a recirculation flow of the exhaust gas. For example, a part of the exhaust gas is recirculated from downstream of a turbocharger to an exhaust gas cooler and from there to a scavenge air receiver, that supplies the scavenging air to the cylinders. The operating parameter is then for example the exhaust gas recirculation rate. A known system for recycling exhaust gas to extract more energy from the exhaust gas and to supply exhaust gas to the scavenging air receiver is the iCER system (iCER: intelligent Control by Exhaust Recycling). A part of the exhaust gas is routed back to the engine. Said part of the exhaust gas is cooled down, mixed with fresh air upstream of the compressor of the turbocharger, compressed by the turbocharger, cooled by the scavenging air cooler, supplied to the scavenge air receiver, and from there introduced into the cylinder.

It goes without saying that in some embodiments only one operating parameter is used for adjusting the control parameter, and in other embodiments a plurality of operating parameters is used for adjusting the control parameter.

Furthermore, a large engine is proposed by the invention which is operated with a method according to the invention.

Preferably, the large engine is designed as a longitudinally scavenged two-stroke large diesel engine, which is configured as a dual-fuel large diesel engine, which can be operated in a liquid mode, in which a liquid fuel is introduced into a cylinder for combustion, and which can further be operated in the gas mode, in which an amount of gas is introduced as fuel into the cylinder.

Further advantageous measures and embodiments of the invention result from the dependent claims.

In the following, the invention is explained in more detail on the basis of embodiments and referring to the drawing. In the drawing shows:

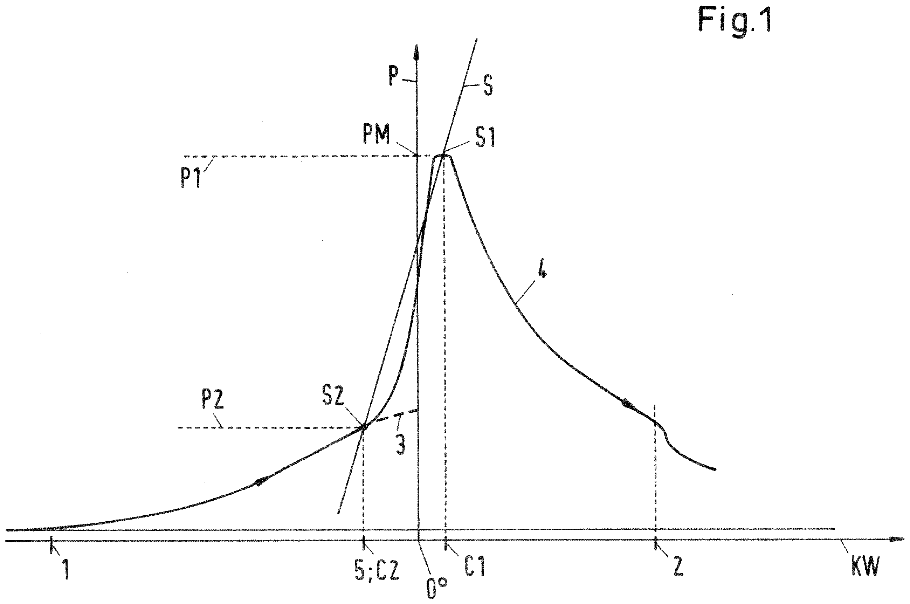

- Fig. 1:: an illustration of the pressure in the cylinder in dependence on the crank angle.

The term "large engine" refers to such internal combustion engines that are usually used as drive units for ships or even in stationary operation, e.g. to drive large generators for generating electrical energy. Typically, the cylinders of a large engine each have an inner diameter (bore) of at least about 200 mm. The term "longitudinally scavenged" means that the scavenging or charging air is introduced into the cylinder in the area of the lower end and an exhaust valve is arranged in or at a cylinder head located at the upper end of the cylinder.

In the following description of the invention, reference is made to a large diesel engine as an example for a large engine. It has to be noted that the invention is not restricted to large diesel engines but also comprises other types of large internal combustion machines, for example Otto engines that can be operated only with Otto operation such as large gas engines, which are operated e.g. with LNG.

The large diesel engine is designed as a dual-fuel large diesel engine, i.e. an engine which can be operated with two different fuels. In particular, the dual-fuel large diesel engine can be operated in a liquid mode in which only a liquid fuel is injected into a combustion chamber of a cylinder. Usually the liquid fuel, for example heavy fuel oil or a diesel oil, is injected directly into the combustion chamber at a suitable time and ignites there according to the diesel principle of self-ignition. The large diesel engine can also be operated in a gas mode in which a gas serving as fuel, for example a natural gas such as LNG (Liquefied Natural Gas) or LPG (Liquefied Petroleum Gas) or ethane, is ignited in the combustion chamber in the form of a premixed air-fuel mixture. In particular, the large diesel engine operates in gas mode according to a low-pressure process, i.e. the gas is introduced into the cylinder in the gaseous state, whereby the injection pressure of the gas is at most 50 bar, preferably at most 20 bar, even more preferred at most 16 bar, and particularly preferred at most about 10 bar. The air-gas mixture is induced ignited in the combustion chamber according to the Otto principle. This induced ignition is usually caused by introducing a small amount of self-igniting liquid fuel (e.g. diesel or heavy fuel oil) into the combustion chamber or into a pre-chamber at a suitable moment, which fuel then ignites itself and causes the induced ignition of the air-fuel mixture in the combustion chamber. In other embodiments the induced ignition is made by way of a spark ignition.

Within the framework of this application, as already explained above, the term "gas mode" or "operation in gas mode" is to be understood such that the large diesel engine is operated only with gas or with a gaseous fuel in this gas mode, wherein optionally a small amount of a self-igniting fuel, e.g. heavy fuel oil or diesel oil, is introduced into the combustion chamber or into one pre-chamber or more pre-chambers merely for the induced ignition of the air-gas mixture (pilot injection).

Furthermore, the dual-fuel large diesel engine can be operated in a mixed mode, in which both liquid fuel and gaseous fuel are injected into the cylinder. In the mixed mode both the combustion of the self-igniting liquid fuel and the combustion of the induced ignited gaseous fuel contribute to the generation of the torque. For example, if the dual-fuel large diesel engine is operated in the gas mode and the required torque cannot be generated only with a high quality combustion of the gaseous fuel, an additional amount of liquid fuel is injected into the cylinder and combusted to additionally generate a torque such that the required torque is reached. Such a mixed mode operation is described for example in EP-A-3 267 017.

In the embodiment described here, it is referred to a large diesel engine which is designed as a longitudinally scavenged dual-fuel two-stroke large diesel engine.

The large diesel engine has at least one but usually a plurality of cylinders. Inside each cylinder, a piston is arranged movable back and forth in a manner known per se along a cylinder axis between a top dead center and a bottom dead center. The piston is connected in a manner known per se to a crosshead via a piston rod, which crosshead is connected to a crankshaft via a push rod or connecting rod so that the movement of the piston is transmitted via the piston rod, the crosshead and the connecting rod to the crankshaft to rotate it. The upper side of the piston delimits together with a cylinder cover a combustion chamber into which a fuel for combustion is introduced.

In the gas mode, this fuel is a gas. In a low-pressure process, for example, the gas is introduced into the cylinder through the cylindrical wall, i.e. the lateral area of the respective cylinder or through the cylinder liner, preferably approximately in the middle between the top and bottom dead center of the piston movement. In the cylinder, the gas mixes with the scavenging air during the compression movement of the piston and thus forms an ignitable air-fuel mixture which is then induced ignited when the piston is approximately at the top dead center. The induced ignition is preferably achieved by injecting a self-igniting fuel, e.g. heavy fuel oil or a diesel fuel, into a pre-chamber of the respective cylinder. The pilot injection, i.e. the injection of the liquid fuel in gas mode, which serves only for the induced ignition of the air-gas mixture in the combustion chamber, is preferably - but not necessarily - carried out by means of one or more pilot injection nozzles which are different from the main injection nozzle or main injection nozzles with which the liquid fuel is injected into the combustion chamber in the liquid mode.

In other embodiments the induced ignition may be caused by a spark ignition, e.g. by electrically generating a spark for the ignition of the air-fuel mixture.

In the preferred embodiment in which the pilot injection nozzle(s) is/are provided, the main injection nozzles for the liquid fuel are deactivated in gas mode, i.e., no injection takes place through the main injection nozzles. If no separate pilot injection nozzles are provided, the pilot injection for induced ignition of the air-gas mixture can also take place by means of the main injection nozzle(s). In any case, the amount of liquid fuel introduced for pilot injection is so small that it makes virtually no contribution to the torque-generating combustion. Typically, the pilot injection is dimensioned such that the combustion of the liquid fuel contributes at most 5% to the amount of energy or energy content released in the combustion process.

In liquid mode, only a liquid fuel is injected into the combustion chamber of the cylinder. Usually, the liquid fuel, for example heavy fuel oil or a diesel oil, is injected directly into the combustion chamber at a suitable time and ignites there according to the diesel principle of self-ignition.

In liquid mode, only the liquid fuel is thus supplied to the combustion chamber by means of the main injection nozzles. If pilot injection nozzles are provided, it is possible to additionally introduce liquid fuel through the pilot injection nozzles in the liquid mode. However, this optional measure mainly serves to prevent the pilot injection nozzles from clogging up or becoming blocked, because the maximum fuel flow through the pilot injection nozzles is far too low to operate the large diesel engine in liquid mode only with it.

The structure and the individual components of a large diesel engine, such as the injection system for the liquid mode, the gas supply system for the gas mode, the gas exchange system, the exhaust system or the turbocharger system for the supply of the scavenging or charging air, as well as the monitoring and control system for a large diesel engine are sufficiently known to the person skilled in the art both for the design as a two-stroke engine and for the design as a four-stroke engine and therefore need no further explanation here.

In the embodiment of a longitudinally scavenged two-stroke large diesel engine described here, scavenging air slots are usually provided in the lower region of each cylinder or cylinder liner, which are periodically closed and opened by the movement of the piston in the cylinder, so that the scavenging air provided by the turbocharger under a charging pressure can flow into the cylinder through the scavenging air slots as long as they are open. In the cylinder head or in the cylinder cover a usually centrally arranged exhaust valve is provided, through which the exhaust gases can be discharged from the cylinder into the exhaust system after the combustion process. The exhaust system guides at least a part of the exhaust gases to a turbine of the turbocharger, whose compressor provides the scavenging air, which is also referred to as charging air, in an scavenge air receiver under the scavenge air pressure. The scavenge air receiver is in fluid communication with the scavenging air slots of the cylinders. The scavenge air pressure is usually adjusted via a so-called waste gate, with which the amount of exhaust gas is adjusted, which is supplied to the turbocharger. The exhaust bypass, i.e. the mass flow of the exhaust gas that bypasses the turbine of the turbocharger, is usually adjusted or regulated by the waste-gate, which can be designed as an analogous valve, for example.

For the introduction of the liquid fuel, the one or the more main injection nozzles are provided, which are arranged in the cylinder head near the exhaust valve, for example. For the gas supply, a gas supply system is provided which comprises at least one gas inlet valve with a gas inlet nozzle. Typically, the gas inlet nozzle is provided in the wall of the cylinder, for example at a height approximately in the middle between the top and bottom dead center of the piston.

The monitoring and control system in modern large diesel engines is an electronic system with which usually all engine or cylinder functions, in particular the injection (start and end of the injection), the pilot injection timing (during gas mode operation) and the activation of the exhaust valve, can be set or controlled or regulated.

Many large diesel engines comprise an exhaust gas recirculation system for recirculating exhaust gas for example to the scavenge air receiver. The exhaust gas recirculation rate can be used to influence the combustion speed, because by adjusting the exhaust gas recirculation rate the reactivity of the air-gas mixture in the combustion chamber of the cylinder can be influenced. In order to even improve the energy efficiency in large diesel engines it is the aim to extract as much energy as possible from the exhaust gases resulting from the combustion process so that this energy is not released into the environment unused, for example in the form of heat. Therefore, the exhaust gas recirculation can be combined with a heat exchanger for cooling the exhaust gas. In large diesel engines, for example, it is known - as an option - to perform a so-called "intelligent control by exhaust recycling (iCER)". Here, depending on the fuel currently being used and the current load at which the engine is operated, a part of the exhaust gases coming from the turbine of the turbocharger is supplied to an exhaust gas cooler, for example a heat exchanger. Optionally, an exhaust gas boiler can be provided to produce steam from the hot exhaust gas. The cooled exhaust gas is then supplied to the scavenging air receiver.

In this respect, it is known, for example, to recirculate a part of the exhaust gas from the exhaust pipe leading from the turbocharger to the exhaust or chimney of the large diesel engine in order to extract energy from the exhaust gas in a heat exchanger, which can then be used. A back pressure valve is usually provided in the exhaust pipe, which can increase the pressure in the exhaust pipe coming from the turbocharger, and which diverts a part of the exhaust gas as recirculation flow into a recirculation pipe, which then supplies the exhaust gas to an exhaust gas cooler, for example to a heat exchanger. From the exhaust gas cooler the exhaust gas is supplied to the scavenge air receiver. For diverting exhaust gas to the recirculation pipe two valves may be provided, namely a first valve in the recirculation pipe which is usually designed as a shut-off valve, i.e. it can be switched between an open position and a closed position, and a second valve, which is provided in the exhaust pipe and is usually called a back pressure valve (BPV). The part of exhaust gas that is diverted as recirculation flow from the exhaust pipe into the recirculation pipe can be adjusted with this valve.

In particular, large diesel engines configured as dual-fuel engines with low pressure gas injection in the gas mode are very sensitive to the air-fuel ratio, which is also referred to as lambda (λ) value. The air-fuel ratio should be kept in such a range that the air-gas ratio is neither too low (mixture too rich) nor too high (mixture to lean). Furthermore, such large diesel engines are very sensitive to too high load and varying ambient conditions such as changes in the ambient temperature or in the humidity of the ambient air.

In order to better control the combustion process in a large diesel engine operated in the gas mode, it is proposed according to the invention to determine a control parameter which is representative for the combustion quality in the cylinder. An upper threshold value as well as a lower threshold value for said control parameter are predetermined and at least one operating parameter of the large diesel engine is adjusted such that the control parameter is at least as large as the lower threshold value and at most as large as the upper threshold value. The at least one operating parameter comprises a pilot injection timing, which determines the start of the combustion by actuating the ignition begin of the air-gas mixture, or the at least one operating parameter comprises a speed adjusting for modifying the combustion speed in the gas mode.

By controlling the control parameter in this way, it may be ensured that the combustion process for each given load of the large diesel engine, is always a high-quality combustion and any abnormal combustion may be avoided. The combustion process may be adjusted such that the combustion is always between the two limit curves, namely the knocking limit and the misfiring limit. Self-ignition of the air-gas mixture is avoided or at least minimized. Thus, by means of the control parameter abnormal combustion, i.e. a combustion beyond the knocking limit, (air-gas mixture is too rich) or self-ignition, respectively, as well as beyond the misfiring limit (air-gas mixture is too lean) may be avoided. Furthermore, an operation of the engine at overload may be avoided, e.g. by limiting the amount of gas introduced into the cylinder.

In particular, it is possible to recognize by means of the control parameter whether the combustion process takes place without self-ignition and lies in an operating range between the knocking limit and the misfiring limit. In this range, an efficient, economical and low-emission operation of the large diesel engine is possible, in particular in the gas mode. This is designated as a high-quality combustion process.

An upper threshold value as well as a lower threshold value for the control parameter are predeterminable and the control parameter is adjusted such that it is always between these two threshold values.

Even more preferred a target value for the control parameter is predetermined, wherein the target value is at least as large as the lower threshold value and/or at most as large as the upper threshold value, and wherein the at least one operating parameter is adjusted to minimize a deviation of the control parameter from the target value.

The target value can be a range and is smaller than the range defined by the lower and the upper threshold value. Whereas predetermining the upper and the lower threshold value avoids a combustion beyond the knocking limit, or self-ignition, respectively, as well as a combustion beyond the misfiring limit, the narrower target value is predetermined to perform the combustion at its optimum.

An advantageous variant is that the threshold values or the target value are predetermined depending on the current load with which the large diesel engine is operated. For this purpose, a look-up table can be provided in the monitoring system of the large diesel engine which contains the threshold values for the control parameter depending on the load of the large diesel engine.

By measuring, for example, the firing and compression pressure curve the combustion can be analyzed and compared with the optimum with respect to efficiency, emissions and reliability of the engine. The optimum can be load dependent and a look-up table, e.g. a vector or a matrix for the setpoint is stored in the monitoring and control system of the engine.

For each control parameter the optimum, e.g. the target value or the lower and/or upper threshold value can be predetermined, preferably depending on the load. During operation in the gas mode the operating parameter or the operating parameters is/are adjusted such that the respective control parameter is as close as possible at its optimum. This will be explained now referring to a specific embodiment.

In this specific embodiment the first control parameter is the location of the firing pressure as measured by the crank angle, at which the maximum pressure in the cylinder occurs during the working cycle of the piston. As a further control parameter, namely the second control parameter, the combustion speed is measured.

Furthermore, three different operating parameters are considered, namely the pilot injection timing as a first operating parameter, the exhaust gas recirculation rate as a second operating parameter, and the exhaust valve timing for closing the exhaust valve as a third operating parameter.

The location of the firing pressure is measured by means of the crank angle. As it is usual in the art, the crank angle 0° corresponds to the top dead center position of the piston. A negative crank angle indicates a position before the piston reaches the top dead center position (compression stroke), and a positive crank angle indicates a position after top dead center, i.e. when the piston has passed the top dead center (expansion stroke). The target value for the location of the firing pressure is the range from 5° to 8° crank angle, i.e. the combustion shall be such that the maximum pressure in the cylinder occurs at the earliest at the crank angle of 5° and at the latest at the crank angle of 8°.Fig. 1 shows the pressure P in the combustion chamber of the cylinder in dependence on the crank angle KW. In the case of a two-stroke large diesel engine, one working cycle of a cylinder comprises a crank angle range of 360°. At the crank angle 0° or 360°, the piston is at the top dead center, at which point the combustion chamber has the minimum volume and near which the ignition of the fuel in the combustion chamber takes place. At the crank angle 180°, the piston is at the bottom dead center, at which point the combustion chamber has its maximum volume. In Fig. 1, that crank angle at which the exhaust valve is closed during the compression stroke of the piston is designated with the reference numeral 1, i.e. where the compression begins in the cylinder, and that crank angle at which, after the combustion process, the exhaust valve is opened during the expansion stroke of the piston, is designated with the reference numeral 2.

The curve designated with the reference numeral 3 indicates the pressure in the cylinder if there is no injection of fuel or combustion in the cylinder. Thus, the curve 3 indicates the purely geometrically determined course of the pressure in the cylinder during the working cycle. The curve designated with the reference numeral 4 indicates the pressure in the cylinder when a combustion process takes place in the cylinder.

When the piston moves from the bottom dead center to the top dead center during a working cycle, the exhaust valve is closed at the crank angle 1, and the compression process begins. At the crank angle 5, the curve 4 starts to deviate from the curve 3, indicating that the combustion process starts by self-ignition of the liquid fuel (liquid mode) or by induced ignition of the air-fuel mixture containing the gas. The following explanation will be restricted to the gas mode. In the gas mode the air-gas mixture is ignited by means of a pilot injection of a small amount of self-igniting liquid fuel, e.g. diesel fuel, in a prechamber of the combustion chamber for the induced ignition of the air-gas mixture in the combustion chamber. Thus, the crank angle 5 indicates the crank angle -at least approximately- at which the pilot injection begins. This crank angle 5 is referred to as "pilot injection timing".

The curve 4 depends on the quality of the combustion process in the range where the curve 4 differs from the curve 3. Due to the combustion process, the pressure in the cylinder increases. After passing the top dead center, the pressure drops during the expansion movement of the piston. This pressure drop increases when the exhaust valve is then opened at the crank angle 2.

Preferably, the second control parameter comprises a first pressure P1 at a first crank angle C1 and a second pressure P2 at a second crank angle C2. According to a preferred embodiment the second control parameter comprises the difference between the first pressure P1 and the second pressure P2 divided by the difference between the first crank angle C1 and the second crank angle C2. Thus, the second control parameter, which measures the combustion speed, is determined by the slope of the straight line S passing through the points S1 and S2 in the diagram in Fig. 1. S1 is the point on the curve 4 where the pressure equals the first pressure P1 and the crank angle equals the first crank angle C1, and S2 is the point on the curve 4 where the pressure equals the second pressure P2 and the crank angle equals the second crank angle C2. The slope of said straight line S determines the second control parameter which is indicative of the combustion speed in the cylinder.

Preferably, but not necessarily, the first pressure P1 is the firing pressure in the cylinder which is the maximum pressure PM in the cylinder during a combustion process, namely the maximum of curve 4. The second pressure P2 is preferably, but not necessarily, the ignition pressure in the cylinder, which is the pressure P2 at that crank angle C2 when the combustion process starts. The crank angle C2 is here at least approximately the same as the crank angle 5.

Preferably, the ignition pressure P2 is determined by comparing an actual cylinder pressure as represented by curve 4 to the compression pressure curve represented by curve 3. The compression pressure curve 3 is the pressure pattern in dependence of the crank angle when no combustion process takes place in the cylinder.

Thus, the actual cylinder pressure (curve 4) is compared to the compression pressure (curve 3) at the same crank angle and when the difference between the actual cylinder pressure and the compression pressure passes a predeterminable limit the actual cylinder pressure at said limit is considered as the ignition pressure P2.

According to this embodiment the second control parameter is determined by (P1-P2)/(C1-C2).

The first control parameter, namely the location of the firing pressure is measured by means of a pressure sensor which is arranged and configured to determine the pressure in the combustion chamber of the cylinder. By monitoring the pressure in the combustion chamber of the cylinder the location of the firing pressure, i.e. the first control parameter can be determined.

During operation of the large diesel engine in the gas mode the first control parameter is adjusted such, that it is at least as large as the lower threshold value and at most as large as the upper threshold value. Preferably, the first control value is at the target value. Furthermore, it is preferred that at least one of the upper and the lower threshold value and the target value is depending on the load with which the large diesel engine is operated. Even more preferred the target value is depending on the load with which the large diesel engine is operated. In the present example, the target value is the crank angle range from 5° to 8°.

Furthermore, it is a preferred option that the control parameters are determined and adjusted individually for each of the cylinders of the large diesel engine.

For adjusting the second control parameter to the target value at least one operating parameter of the large diesel engine is used. As a first step, the first operating parameter, namely the pilot injection timing is adjusted. There is a maximum range for the pilot injection timing, within which the pilot injection timing can be adjusted without jeopardizing an efficient and reliable operation of the engine. The maximum range for the pilot fuel injection timing can be for example the crank angle range from -17° to - 5°. If the location of the firing pressure (first control parameter) cannot be adjusted to the target value of 5° to 8° since the pilot injection timing is at its limit the second operating parameter, namely the exhaust gas recirculation rate, and/or the third operating parameter, i.e. the exhaust valve timing for closing the exhaust valve have to be adjusted. If, for example, the pilot injection timing is "sticking" at the maximum limit (e.g. -5°crank angle) the exhaust gas recirculation rate has to be increased. This takes place by a closing of the back-pressure valve by e.g. 5%. If the pilot injection timing is "sticking" at the minimum limit (e.g. -17° crank angle) the exhaust gas recirculation rate has to be decreased by opening the back-pressure valve by e.g. 5%.

Additionally, by adjusting the exhaust valve timing (third operating parameter) individually per cylinder a balancing of the compression pressure can be achieved.

Furthermore, by adjusting the pilot fuel injection timing (°CA) individually per cylinder a balancing of the firing pressure can be achieved.

The procedure that has been described can also be used for other (second) control parameters, for example, the value of the firing pressure, i.e. the magnitude of the firing pressure, the compression pressure, the ignition begin, the heat release rate.

By the adjustment of the pilot injection timing (first operating parameter) the ignition begin is influenced, but also the firing pressure and the location of the firing.

The exhaust gas recirculation rate (second operating parameter) is influencing the combustion speed and the firing pressure.

By the adjustment of the exhaust valve timing (third operating parameter) the air-gas-ratio and the compression pressure is influenced. The air-gas-ratio has an effect on the combustion speed and the location of the firing pressure, whereas the compression pressure is influencing mainly the firing pressure.

The operating parameters can also be used for the adjustment of the combustion speed and the heat release rate position.

For example, to make the combustion faster or slower the air-gas-ratio and/or the CO₂ content in the combustion chamber can be adjusted. The C02 content can be adjusted by the exhaust gas recirculation rate. If the pilot injection timing is set e.g. to a fixed value, the combustion speed and the heat release rate position can be adjusted by late closing of the exhaust valve and/or decreased exhaust gas recirculation rate to make the combustion faster.

Additionally, by adjusting the exhaust valve individually per cylinder a balancing between the cylinders can be achieved to get the same combustion behavior in all cylinders.

In addition, preferred operating parameters for adjusting the control parameters to the predeterminable range or the target value comprise the following parameters, wherein only one of the operating parameters or a plurality of the operating parameters may be used to adjust the control parameter(s).

One preferred operating parameter for adjusting the control parameter(s) is the amount of gas introduced into the cylinder. The amount of gas is preferably adjusted by the timing of the gas injection, in particular by the duration of the gas injection. In case the amount of gas introduced in a particular cylinder shall be reduced, the duration of the gas injection is shortened. The method according to the invention may also be used to control the amount of gas introduced into the cylinder, e.g. for avoiding an operation at overload.

Another preferred operating parameter is the scavenge air pressure, with which the scavenging air is supplied to the cylinder. The scavenge air pressure prevailing in the intake receiver may be modified for example by means of the waste gate, with which the mass flow of the exhaust gas driving the turbocharger is adjusted,

Still another preferred operating parameter is the exhaust valve timing for opening and closing the exhaust valve of the particular cylinder. For example, by delaying the closing of the exhaust valve to a larger crank angle the amount of air available in the cylinder may be reduced.

Thus, by the method according to the invention the combustion can be controlled, optionally for each cylinder individually, for example by the exhaust valve closing or timing, and/or the amount of gas introduced into the cylinder, and/or the pilot injection timing and/or other operating parameter(s), such that there is always a high-quality combustion, namely a combustion without self-ignition of the air-gas mixture and/or taking place between the knocking limit and the misfiring limit and preferably at an optimum for the combustion process. The control parameter(s) for assessing the combustion process is a parameter that is characteristic of the combustion quality.

By controlling the combustion process such that it is always a high-quality combustion, it is also possible to reduce or to minimize the emissions of the large diesel engine, for example the NOx emissions. It becomes for example possible that the IMO TIER III limit regarding NOx emissions can be met independent of the ambient conditions, e.g. the temperature or the humidity of the air in the environment. Furthermore, the iCER process can by optimized to even more increase the energy efficiency of the large diesel engine.

In addition, the method according to the invention may be used as a load limiter to avoid an overload of the engine.

Additionally, it is possible to implement a pre-ignition monitoring function, for example by comparing the ignition begin (as determined e.g. by the ignition pressure) with the pilot injection timing for the induced ignition of the air-gas mixture.

## Claims

1. A method for operating a large engine, which can be operated at least in a gas mode, in which an amount of gas is introduced as fuel into the cylinder, the gas is mixed with scavenging air and ignited at an air-gas-ratio by means of a pilot injection to start the combustion, wherein during operation in the gas mode at least one control parameter, which is characteristic of the combustion quality in the cylinder, is determined, wherein an upper threshold value and/or a lower threshold value are predetermined for the control parameter, and wherein at least one operating parameter is adjusted such that the control parameter is at least as large as the lower threshold value and/or at most as large as the upper threshold value, **characterized in that** the at least one operating parameter comprises a pilot injection timing, which determines the start of the combustion, or a combustion speed adjusting for modifying the combustion speed.

2. A method in accordance with claim 1, wherein at least two operating parameters, namely a first operating parameter and a second operating parameter, are adjusted such that the control parameter is at least as large as the lower threshold value and/or at most as large as the upper threshold value.

3. A method in accordance with claim 2, wherein the first operating parameter is the pilot injection timing, and wherein the second operating parameter is an exhaust gas recirculation rate or an exhaust valve timing for closing an exhaust valve of the cylinder.

4. A method in accordance with anyone of claims 2-3, wherein initially the first operating parameter is adjusted without changing the second operating parameter.

5. A method in accordance with anyone of claims 2-4, wherein a target value for the control parameter is predetermined, wherein the target value is at least as large as the lower threshold value and/or at most as large as the upper threshold value, and wherein the at least one operating parameter or the first and the second operating parameter is/are adjusted to minimize a deviation of the control parameter from the target value.

6. A method in accordance with anyone of the preceding claims, wherein the at least one control parameter comprises a location of a firing pressure, or a location of the beginning of the pilot injection, wherein each location is measured by means of a crank angle.

7. A method in accordance with anyone of the preceding claims, wherein the at least one control parameter comprises the firing pressure in the cylinder.

8. A method in accordance with anyone of the preceding claims, wherein the at least one control parameter comprises a control parameter which is characteristic of the combustion speed in the cylinder.

9. A method in accordance with anyone of the preceding claims, wherein the control parameter comprises a first pressure (P1) at a first crank angle (C1) and a second pressure (P2) at a second crank angle (C2).

10. A method in accordance with claim 9, wherein the control parameter comprises the difference between the first pressure (P1) and the second pressure (P2) divided by the difference between the first crank angle (C1) and the second crank angle (C2).

11. A method in accordance with anyone of claims 9-10, wherein the first pressure (P1) is the firing pressure in the cylinder, and/or the second pressure (P2) is the ignition pressure in the cylinder.

12. A method in accordance with anyone of the preceding claims, wherein the control parameter comprises a heat release rate of the combustion.

13. A method in accordance with anyone of the preceding claims, wherein the control parameter is determined individually for each cylinder, and wherein the operating parameter is adjusted individually for each cylinder such that the control parameter is at least as large as the lower threshold value and at most as large as the upper threshold value.

14. A method in accordance with anyone of the preceding claims, wherein at least one of the lower threshold value and the upper threshold value is depending on the load with which the engine is operated.

15. A large engine **characterized in that** the large engine is operated with a method according to anyone of the preceding claims, wherein the large engine is preferably designed as a longitudinally scavenged two-stroke large diesel engine, which is configured as a dual-fuel large diesel engine, which can be operated in a liquid mode, in which a liquid fuel is introduced into a cylinder for combustion, and which can further be operated in the gas mode, in which an amount of gas is introduced as fuel into the cylinder.
